# EUROPÄISCHE PATENTSCHRIFT

(11) **EP 1 954 964 B1**
(45) Veröffentlichungstag und Bekanntmachung des Hinweises auf die Patenterteilung: **30.09.2009**
(21) Anmeldenummer: 06818707.9
(22) Anmeldetag: 22.11.2006
(51) Int. Cl.: F16H 57/02

(54) **GETRIEBE**
TRANSMISSION
TRANSMISSION

(30) Priorität: 30.11.2005 DE 102005056988
(43) Veröffentlichungstag der Anmeldung: 13.08.2008
(73) Patentinhaber: ZF Friedrichshafen AG, 88038 Friedrichshafen (DE)
(72) Erfinder: PATZNER, Jens, 14478 Potsdam (DE); LINKE, Frank, 14772 Brandenburg (DE); BORK, Norbert, 39218 Schönebeck (DE)
(86) Internationale Anmeldenummer: PCT/EP2006/011154
(87) Internationale Veröffentlichungsnummer: WO 2007/062764

(56) Entgegenhaltungen:
- DE-A1- 2 745 607
- DE-A1- 10 316 321
- US-A- 4 793 200
- US-A- 5 647 246

## Beschreibung

Die Erfindung betrifft ein Getriebe gemäß dem Oberbegriff des Patentanspruchs 1.

Bei Getrieben in Kraftfahrzeugen wird die Drehrichtungsumkehr zur Rückwärtsfahrt üblicherweise über ein Zwischenrad realisiert, das auf einer Zwischenradwelle im Getriebegehäuse gelagert ist. Das Zwischenrad hat gegenüber anderen Zahnrädern im Getriebe die Besonderheit, dass es zweimal im Eingriff mit Zahnrädern steht, nämlich zum einen mit einem zugeordneten Zahnrad auf der Hauptwelle beziehungsweise Abtriebswelle des Getriebes und zum anderen mit einem zugeordneten Zahnrad auf einer Antriebswelle bzw. Vorgelegewelle. Dies hat zur Folge, dass auf die Lagerungen der Zwischenradwelle sehr hohe Kräfte wirken.

Herkömmlich ist die Zwischenradwelle beispielsweise einenends in oder an einer Seitenwand des Getriebegehäuses und anderenends in einer an einer Seitenwand des Getriebegehäuses festgelegten Halbschale abgestützt. Ebenso kann die Zwischenradwelle auch beiderseitig in jeweils einer an einer Seitenwand des Getriebegehäuses festgelegten Halbschale abgestützt sein. Die Radiallasten aus der Lagerung bzw. Abstützung in diesen Halbschalen werden über einen relativ geringen Druckwinkelbereich und weitgehend punktförmig in das Getriebegehäuse eingeleitet.

Um unzulässige Verlagerungen und vor allem bei Stoßbelastungen Gehäusebrüche zu vermeiden, wird mit der DE 103 16 321 A1, die die Merkmale des Oberbegriffs des Anspruchs 1 offenbart, vorgeschlagen, in dem Getriebegehäuse, welches Belastungen aufnehmende Lagerstellen aufweist, auf der Oberfläche des Getriebegehäuses Versteifungsrippen anzuordnen, die die Belastungen aus den Lagerstellen aufnehmen und aus dem Bereich dieser Lagerstellen bis in Bereiche des Getriebegehäuses wegführen, in denen eine hohe Steifigkeit desselben gegeben ist.

Vor diesem Hintergrund liegt der Erfindung die Aufgabe zugrunde, ein im Hinblick auf den Stand der Technik weiterentwickeltes Getriebe zu schaffen, welches bei Vermeidung erhöhter Wandstärken des Getriebegehäuses mit einfachen und kostengünstigen Mitteln dennoch eine ausreichende Abstützung von Belastungen aufnehmenden Lagerstellen gestattet, die durch eine Halbschale gebildet sind.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind:

Die Erfindung betrifft demnach Getriebe mit einem Getriebegehäuse und wenigstens einem in demselben mittels einer Zwischenradwelle oder Zwischenradachse gelagerten Zwischenrad, welches mit einem Zahnrad einer ersten Getriebewelle und einem Zahnrad einer zweiten Getriebewelle im Eingriff ist, wobei die Zwischenradwelle oder Zwischenradachse einenends in oder an einem Wandungsabschnitt des Getriebegehäuses mittels zumindest einer Lagerung mit einem Umschlingungswinkel von 360° und anderenends in einer an einer Seitenwand des Getriebegehäuses festgelegten Halbschale, oder beiderseits jeweils in einer an einer Seitenwand des Getriebegehäuses festgelegten Halbschale abgestützt ist.

Bei diesem Getriebe ist gemäß der Erfindung zusätzlich vorgesehen, dass der zumindest einen, die Zwischenradwelle oder Zwischenradachse beziehungsweise das Zwischenrad tragenden Halbschale wenigstens ein, einen Wandungsbereich des Getriebegehäuses in Umfangsrichtung desselben überbrückender starrer Ausleger mit zumindest einem freien Ende fest zugeordnet ist, wobei das zumindest eine freie Ende, eine weitere Abstützung realisierend, an der Seitenwand des Getriebegehäuses festlegbar ist.

Durch diese Maßnahme ist in besonders vorteilhafter Weise eine Abstützung und somit Krafteinleitung über einen großen Bereich, auch über an sich nicht tragende Bereiche des Getriebegehäuses hinweg, ermöglicht, wodurch herkömmlich favorisierte örtliche Erhöhungen der Wandstärke oder mit eingegossene Verrippungen des Getriebegehäuses entbehrlich sind.

In weiterer Ausgestaltung der Erfindung kann der wenigstens eine Ausleger einteilig oder zweiteilig mit der Halbschale ausgebildet sein. Wie die Erfindung weiter vorsieht, sind der Ausleger und die Halbschale vorzugsweise als Gussbauteile ausgebildet.

Weiterhin wird vorgeschlagen, dass der Ausleger durch eine Halbschalenkonstruktion gebildet ist. Zweckmäßigerweise sind die Halbschale und der Ausleger durch konzentrische Bearbeitung oder Ausbildung mittels zumindest einer radialen Verschraubung an der Seitenwand des Getriebegehäuses festlegbar.

In erfinderischer Fortbildung ist des Weiteren vorgesehen, dass in den genannten Ausleger zumindest ein zusätzliches Lager für zumindest eine Welle, wie eine Hauptwelle oder Vorgelegewelle des Getriebes, integriert ist.

Schließlich kann im Sinne der Erfindung das Zwischenrad durch ein Rückwärtsgang-Zwischenrad gebildet sein.

Zur Verdeutlichung der Erfindung sind der Beschreibung Zeichnungen beigefügt.

In diesen zeigen:
- Fig. 1: ein erfindungsgemäß ausgebildetes Getriebe in einer Seitenansicht mit im Getriebegehäuse gelagerter Hauptwelle, Vorgelegewelle und Zwischenradwelle,
- Fig. 2: das Getriebegehäuse des Getriebes gemäß Fig. 1 ohne Wellen und Zahnräder und
- Fig. 3: eine vorteilhafte Weiterbildung des Getriebes gemäß Fig. 1.

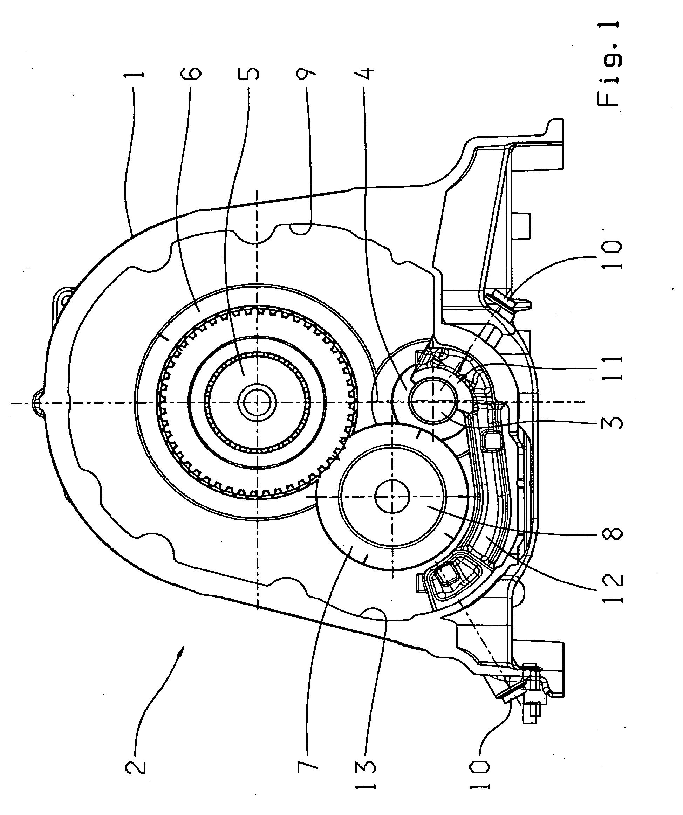

Fig. 1 zeigt danach ein Getriebegehäuse 1 eines Getriebes 2 für insbesondere ein Kraftfahrzeug, mit einem in demselben mittels einer Zwischenradwelle 3 gelagerten Zwischenrad 4. Das Zwischenrad 4 ist vorliegend durch ein Rückwärtsgang-Zwischenrad gebildet und ist in an sich bekannter Weise sowohl mit einem auf einer Hauptwelle 5 gelagerten Zahnrad 6 als auch mit einem Zahnrad 7 einer Vorgelegewelle 8 im Eingriff.

Die Zwischenradwelle 3 ist bekanntermaßen einenends in oder an einem hier nicht näher gezeigten Wandungsabschnitt des Getriebegehäuses 1 gelagert, vorzugsweise mittels eines in diesen Wandungsabschnitt eingesetzten Wälzlagers, welches die Zwischenradwelle 3 mit einem Umschlingungswinkel von 360° lagert. Anderenends ist die Zwischenradwelle 3 in einer an einer Seitenwand 9 des Getriebegehäuses 1 vorzugsweise mittels einer Verschraubung 10 festgelegten Halbschale 11 abgestützt. Ebenso ist es möglich und wird durch die Erfindung mit erfasst, dass die Zwischenradwelle 3 beiderseits jeweils in einer an einer Seitenwand 9 des Getriebegehäuses 1 festgelegten Halbschale 11 abgestützt ist (nicht näher gezeigt).

Was die Hauptwelle 5 und die Vorgelegewelle 8 anbelangt, so können dieselben jeweils an ihren beiden Enden in oder an stirnseitigen Wandabschnitten mittels Wälzlager mit einem Umschlingungswinkel von 360° abgestützt sein (nicht näher dargestellt).

Um nunmehr dem Problem der sich als nachteilig erwiesenen relativ punktförmigen Belastung im Bereich der zumindest einen, die Zwischenradwelle 3 beziehungsweise das Zwischenrad 4 tragenden Halbschale 11 wirkungsvoll begegnen zu können, ist der Halbschale 11 wenigstens ein, einen Wandungsbereich des Getriebegehäuses 1 in Umfangsrichtung desselben überbrückender Ausleger 12 fest zugeordnet.

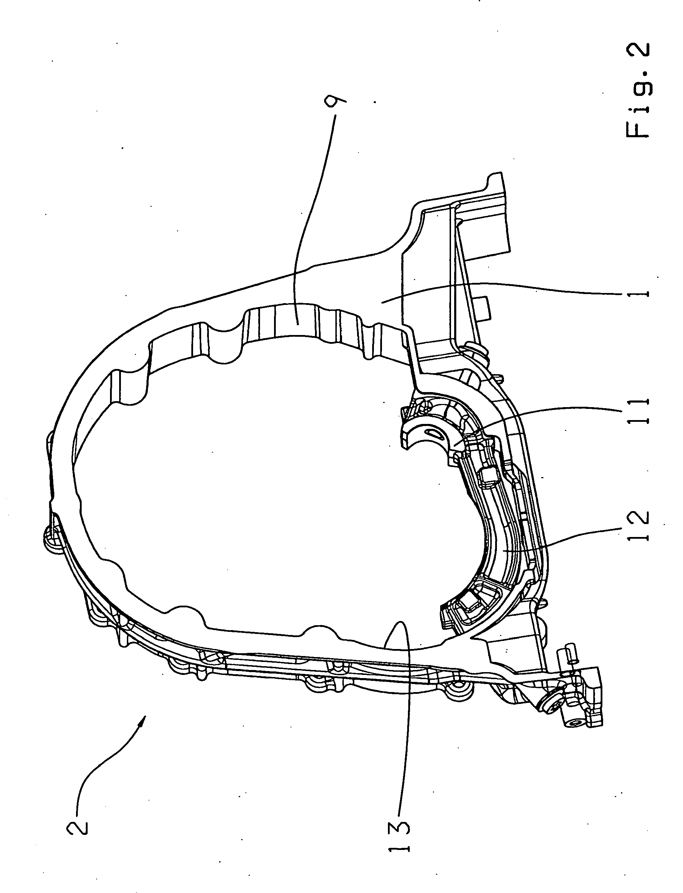

Gemäß der aus Fig. 2 besonders gut ersichtlichen bevorzugten Ausführungsform ist das eine Ende des Auslegers 12 fest mit der an der Seitenwand 9 des Getriebegehäuses 1 festlegbaren Halbschale 11 verbunden, wogegen das freie Ende des Auslegers 12 an der in Umfangsrichtung gegenüberliegenden Seitenwand 13 des Getriebegehäuses 1 festlegbar ist. Auch hierzu ist eine Verschraubung 10 vorgesehen.

Durch diese Maßnahme ist eine weitere Abstützung für Zwischenradwelle 3 realisiert, wodurch besonders vorteilhaft beispielsweise ein Bereich des Getriebegehäuses 1 überbrückt werden kann, welcher aufgrund konstruktiver Rahmenbedingungen, z. B. aufgrund etwaigen nicht vorhandenen Bauraums für größere Gehäusewandstärken bzw. Versteifungen, nicht als Abstützung für die Halbschale 11 verwendet werden kann.

Die Erfindung beschränkt sich jedoch nicht auf die bevorzugte Ausführungsform. So ist es beispielsweise auch denkbar, dass die Belastungsabstützung überwiegend mittels des Auslegers 12 realisiert ist, indem derselbe zwei an den Seitenwänden 9, 13 festlegbare freie Enden aufweist, und die Halbschale 11 in einem beliebigen Bereich zwischen diesen freien Enden des Auslegers 12 mit demselben fest verbunden ist, ohne selbst direkt mit dem Getriebegehäuse 1 fest verbunden zu sein (nicht näher dargestellt).

Der Ausleger 12 ist vorzugsweise mit der Halbschale 11 einstückig als Gussbauteil ausgebildet. Selbstverständlich kann es auch angezeigt sein und ist demgemäß durch die Erfindung mit erfasst, dass beide Bauteile getrennt voneinander gefertigt und nachfolgend miteinander montiert werden bzw. an den Seitenwänden 9, 13 so festgelegt werden, dass im Sinne der Erfindung eine Kraftübertragung von der Halbschale 11 in die eine und die andere Seitenwand 9, 13 des Getriebegehäuses 1 über den Ausleger 12 erfolgt ist.

Wie die Fig. 1 und 2 weiter zeigen, ist der Ausleger 12 als eine Halbschalenkonstruktion gebildet, die sich weitestgehend an die Innenkontur des Getriebegehäuses 1 anschmiegt, wodurch der erforderliche Bauraum für den Ausleger 12 minimiert ist.

Zweckmäßigerweise sind die Halbschale 11 und der Ausleger 12 durch konzentrische Bearbeitung bzw. Ausbildung mittels radialer Verschraubungen 10 an der jeweiligen Seitenwand 9, 13 des Getriebegehäuses 1 festgelegt, wodurch die Krafteinleitung in diese Seitenwände 9, 13 optimiert ist.

Der Ausleger 12 eignet sich jedoch nicht nur zur Abstützung der Zwischenradwelle 3 eines Zwischenrades 4, vorliegend eines Rückwärtsgang-Zwischenrades, sondern kann auch weitere Abstützungsaufgaben übernehmen.

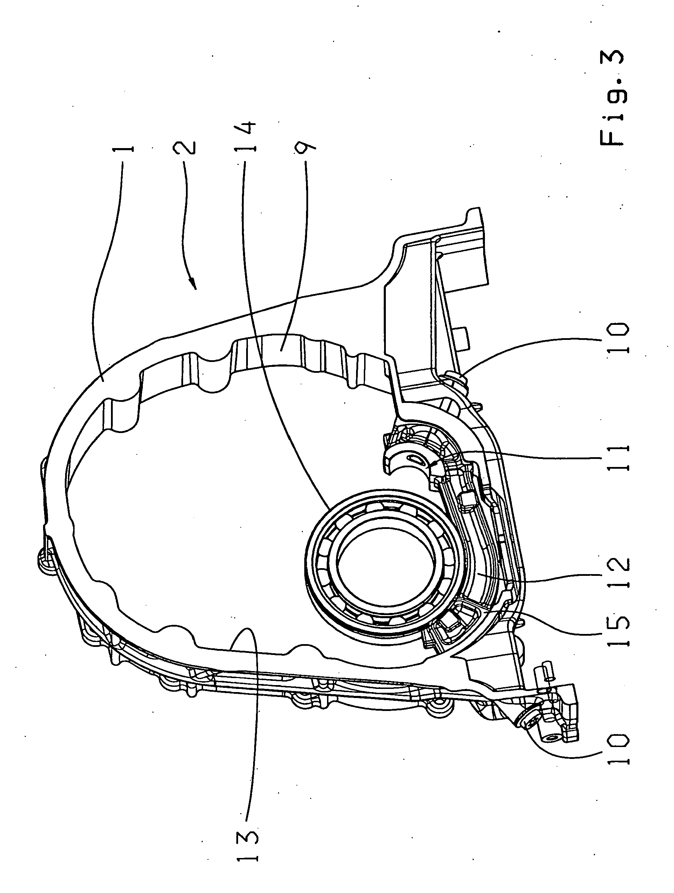

So ist es beispielsweise möglich, in den Ausleger 12 zumindest ein zusätzliches Lager 14 für zumindest eine Welle, welches beispielsweise die Hauptwelle 5 oder die Vorgelegewelle 8 sein kann, zu integrieren. Fig. 3 zeigt eine derartige Konstruktion des Auslegers 12, wobei demselben neben einer Halbschale 11 noch ein Lager 14 zur Aufnahme der Vorgelegewelle 8 fest zugeordnet ist. Hierdurch ist es möglich, ein zusätzliches Stützlager für eine Welle auszubilden, um eine unzulässige Durchbiegung derselben zu verhindern. Insoweit kann dem Ausleger 12 noch ein Stützelement 15 zugeordnet sein, welches eine etwaige Beabstandung zwischen dem Ausleger 12 und der Innenkontur des Getriebegehäuses 1 im Bereich des Lagers 14 ausgleicht (Fig. 3).

Bei Verwendung einer drehbaren Zwischenradwelle ist diese beidseitig radial gelagert, beispielsweise in Form von Wälzlagern. Bei der Verwendung einer Zwischenradachse, auf der ein Zwischenrad drehbar gelagert ist, ist die Zwischenradachse beidseitig drehfest angeordnet.

### Bezugszeichen

- 1: Getriebegehäuse
- 2: Getriebe
- 3: Zwischenradwelle oder Zwischenradachse
- 4: Zwischenrad
- 5: Hauptwelle
- 6: Zahnrad (Hauptwelle 6)
- 7: Zahnrad (Vorgelegewelle 8)
- 8: Vorgelegewelle, Getriebewelle
- 9: Seitenwand des Getriebegehäuses
- 10: Verschraubung
- 11: Halbschale
- 12: Ausleger
- 13: Seitenwand des Getriebegehäuses
- 14: Lager
- 15: Stützelement

## Patentansprüche

1. Getriebe (2) mit einem Getriebegehäuse (1) und wenigstens einem in demselben mittels einer Zwischenradwelle oder Zwischenradachse (3) gelagerten Zwischenrad (4), welches mit einem Zahnrad (6) einer ersten Getriebewelle (5) und einem Zahnrad (7) einer zweiten Getriebewelle (8) im Eingriff ist, wobei die Zwischenradwelle oder Zwischenradachse (3) einenends in oder an einem Wandungsabschnitt des Getriebegehäuses (1) mittels zumindest einer Lagerung mit einem Umschlingungswinkel von 360° und anderenends in einer an einer ersten Seitenwand (9) des Getriebegehäuses (1) festgelegten Halbschale (11), oder beiderseits jeweils in einer an der ersten Seitenwand (9) des Getriebegehäuses (1) festgelegten Halbschale (11) abgestützt ist, **dadurch gekennzeichnet, dass** der zumindest einen, die Zwischenradwelle (3) beziehungsweise das Zwischenrad (4) tragenden Halbschale (11) wenigstens ein, einen Wandungsbereich des Getriebegehäuses (1) in Umfangsrichtung desselben überbrückender starrer Ausleger (12) mit zumindest einem freien Ende fest zugeordnet ist, wobei das zumindest eine freie Ende, eine weitere Abstützung realisierend, an einer in Umfangsrichtung gegenüberliegenden zweiten Seitenwand (13) des Getriebegehäuses (1) festlegbar ist.

2. Getriebe nach Anspruch 1, **dadurch gekennzeichnet, dass** der wenigstens eine Ausleger (12) einteilig oder zweiteilig mit der Halbschale (11) ausgebildet ist.

3. Getriebe nach Anspruch 1 oder 2, **dadurch gekennzeichnet, dass** Ausleger (12) und Halbschale (11) vorzugsweise als Gussbauteile ausgebildet sind.

4. Getriebe nach einem der Ansprüche 1 bis 3, **dadurch gekennzeichnet, dass** der Ausleger (12) durch eine Halbschalenkonstruktion gebildet ist.

5. Getriebe nach einem der Ansprüche 1 bis 4, **dadurch gekennzeichnet, dass** Halbschale (11) und Ausleger (12) durch konzentrische Bearbeitung oder Ausbildung mittels zumindest einer radialen Verschraubung (10) an einer Seitenwand (9, 13) des Getriebegehäuses (1) festlegbar sind.

6. Getriebe nach einem der Ansprüche 1 bis 5, **dadurch gekennzeichnet, dass** in den Ausleger (12) zumindest ein zusätzliches Lager (14) für zumindest eine Welle, wie die erste Getriebewelle (5) oder die zweite Getriebewelle (8), integriert ist.

7. Getriebe nach einem der Ansprüche 1 bis 6, **dadurch gekennzeichnet, dass** das Zwischenrad (4) durch ein Rückwärtsgang-Zwischenrad gebildet ist.

## Claims

1. Transmission (2) having a transmission housing (1) and at least one intermediate gear (4) which is mounted in the said transmission housing (1) by means of an intermediate-gear shaft or intermediate-gear pin (3) and is in engagement with a gearwheel (6) of a first transmission shaft (5) and a gearwheel (7) of a second transmission shaft (8), the intermediate-gear shaft or intermediate-gear pin (3) being supported at one end in or on a wall section of the transmission housing (1) by means of at least one bearing with a wraparound angle of 360° and at the other end in a half shell (11) which is fixed on a first side wall (9) of the transmission housing (1), or on both sides in each case in a half shell (11) which is fixed on the first side wall (9) of the transmission housing (1), **characterized in that** the at least one half shell (11) which carries the intermediate-gear shaft (3) and the intermediate gear (4) is fixedly assigned at least one rigid bracket (12) which bridges a wall region of the transmission housing (1) in the circumferential direction of the latter and has at least one free end, it being possible for the at least one free end to be fixed on a second side wall (13), lying opposite in the circumferential direction, of the transmission housing (1) in a manner which realizes a further support.

2. Transmission according to Claim 1, **characterized in that** the at least one bracket (12) is configured in one piece or two pieces with the half shell (11).

3. Transmission according to Claim 1 or 2, **characterized in that** the bracket (12) and the half shell (11) are preferably configured as cast components.

4. Transmission according to one of Claims 1 to 3, **characterized in that** the bracket (12) is formed by a half-shell construction.

5. Transmission according to one of Claims 1 to 4, **characterized in that** the half shell (11) and the bracket (12) can be fixed by concentric machining or formation by means of at least one radial screw connection (10) on a side wall (9, 13) of the transmission housing (1).

6. Transmission according to one of Claims 1 to 5, **characterized in that** at least one additional bearing (14) for at least one shaft, such as the first transmission shaft (5) or the second transmission shaft (8), is integrated into the bracket (12).

7. Transmission according to one of Claims 1 to 6, **characterized in that** the intermediate gear (4) is formed by a reverse-gear intermediate gear.

## Revendications

1. Transmission (2) comprenant un carter de transmission (1) et au moins une roue intermédiaire (4) montée dans celui-ci au moyen d'un arbre de roue intermédiaire ou d'un axe de roue intermédiaire (3), qui est en prise avec une roue dentée (6) d'un premier arbre de transmission (5) et avec une roue dentée (7) d'un deuxième arbre de transmission (8), l'arbre de roue intermédiaire ou l'axe de roue intermédiaire (3) étant supporté à une extrémité dans ou contre une portion de paroi du carter de transmission (1) au moyen d'au moins un support sur palier avec un angle d'enveloppement de 360° et à l'autre extrémité dans une demi-coque (11) fixée sur une première paroi latérale (9) du carter de transmission (1), ou des deux côtés à chaque fois dans une demi-coque (11) fixée sur la première paroi latérale (9) du carter de transmission (1), **caractérisée en ce que** l'au moins une demi-coque (11) portant l'arbre de roue intermédiaire (3) ou la roue intermédiaire (4) est associée fixement à au moins un bras de potence (12) rigide surmontant une région de paroi du carter de transmission (1) dans la direction périphérique de celui-ci, avec au moins une extrémité libre, l'au moins une extrémité libre, en réalisant un support supplémentaire, pouvant être fixée sur une deuxième paroi latérale (13) du carter de transmission (1) opposée dans la direction périphérique.

2. Transmission selon la revendication 1, **caractérisée en ce que** l'au moins un bras de potence (12) est réalisé d'une seule pièce ou en deux pièces avec la demi-coque (11).

3. Transmission selon la revendication 1 ou 2, **caractérisée en ce que** le bras de potence (12) et la demi-coque (11) sont réalisés de préférence sous forme de composants en fonte.

4. Transmission selon l'une quelconque des revendications 1 à 3, **caractérisée en ce que** le bras de potence (12) est formé par une construction en demi-coque.

5. Transmission selon l'une quelconque des revendications 1 à 4, **caractérisée en ce que** la demi-coque (11) et le bras de potence (12) peuvent être fixés par usinage concentrique ou réalisation au moyen d'au moins un vissage radial (10) sur une paroi latérale (9, 13) du carter de transmission (1).

6. Transmission selon l'une quelconque des revendications 1 à 5, **caractérisée en ce que** l'on intègre dans le bras de potence (12) au moins un palier supplémentaire (14) pour au moins un arbre, comme le premier arbre de transmission (5) ou le deuxième arbre de transmission (8).

7. Transmission selon l'une quelconque des revendications 1 à 6, **caractérisée en ce que** la roue intermédiaire (4) est formée par une roue intermédiaire de marche arrière.
